# EUROPEAN PATENT SPECIFICATION

(11) **EP 2 149 952 B1**
(45) Date of publication and mention of the grant of the patent: **18.05.2016**
(21) Application number: 09380139.7
(22) Date of filing: 22.07.2009
(51) Int. Cl.: H02G 3/08, H02G 3/10, H02G 3/12

(54) **Plural electrical mechanism carrier**
Träger für mehrere elektrische Mechanismen
Support pour pluriel mécanismes électrique

(30) Priority: 28.07.2008 ES 200801595 U
(43) Date of publication of application: 03.02.2010
(73) Proprietor: Unex Aparellaje Electrico S.L., 08903 L'Hospitalet de Llobregat (Barcelona) (ES)
(72) Inventor: Salcedo Suñol, Eloi, 08620 Sant Vicenc dels Horst (Barcelona) (ES)
(74) Representative: Curell Suñol S.L.P.

(56) References cited:
- EP-A- 0 473 482
- EP-A- 0 874 435
- EP-A- 1 071 182
- EP-A- 1 351 359
- DE-A1- 19 814 567
- FR-A- 2 804 547

## Description

### Field of the invention

This invention relates to a plural electrical mechanism carrier, in particular one that is applied universally to fixed structures such as raceways for electrical conductors, electrical distribution columns and desktop multiple connection bases, without excluding other applications that can be control panels for apparatuses and machines, control cabinets, etc.

### State of the art

Traditionally, electrical mechanisms have been assembled as units in the raceways wherein the electrical conductors of an installation are housed, by means of arrangements including a box and a seating frame for the front panel of an electrical mechanism, as well as means for attaching to the raceway.

This way of proceeding makes it necessary to juxtapose two or more boxes with electrical mechanisms when these are installed in a raceway, whereby during assembly slight separations are formed which influence the electrical insulation and security conditions, and which create an irregular appearance which does little credit to the fitter's level of professionalism.

Various attempts have been made to overcome these drawbacks, as indicated in the background to the invention detailed bellow.

Document ES2126168T3 describes an inner raceway which is suspended from an outer raceway and forms the support for at least one electrical mechanism. This inner raceway consists of a U-shape section drawn from a synthetic electrical insulating material, which is open at its ends, without forming a box, and with its top face open.

The applicant is owner of Spanish Utility Model No. ES1036812U which refers to a box for installing electrical mechanisms in a raceway for electrical conductors, particularly a box that can attach to a support device organized according to the object of Spanish Patent No. ES2065275B1, which can be installed specifically in an insulating raceway for electrical conductors of the type that adopt a U-shape rectangular straight section and are provided with respective longitudinal grooves on their two walls for snap retaining a cover section. Said box is made up of an essentially parallelepiped shaped tray that has an array of tabs on its walls The tabs corresponding to the larger walls are of equal length and end in a like number of suspension flanges which, as they have different lengths and dimensions and which project outwards from the tray and are coplanar to some angled corner pieces arranged on each corner of the tray. The tabs on the smaller walls do not have such flanges and one of the central tabs is taller and projects further that the adjacent ones and has the same height as the larger walls, presenting a lower stiffening area and a retention tooth applicable against the support device.

The applicant is also owner of Spanish Utility Model No. ES1061145U which refers to an improved multiple electrical connection base, in particular a connection base of the type made up of a box that carries a plurality of electrical mechanisms with a connection socket and which have means for sitting on and attaching to a horizontal or vertical board, of a table or the like, characterized in that the box forming the connection base box includes, integrally on the bottom part thereof, a support foot that forms attachment means for said base, which are intended to engage elastically into a seat frame attached to the table board.

In said document ES2126168T3 the U-shape section does not form a box enclosing the electrical mechanisms, and neither does it have a seat frame for the front panel thereof, although it does have means for attaching to a raceway. The device disclosed in said document ES1036812U, on the other hand, does form a protective box for the electrical mechanisms and has means for attaching to a raceway, but it lacks a seat frame for the front panel of the electrical mechanisms. The device disclosed in said document ES1061145U consists of a multiple connection base that is not designed to be housed inside a raceway, but is instead an autonomous device to be installed on a work table, and therefore it does not have means for attaching to a raceway, although it does include means for attaching to said work table.

EP1351359A1 discloses an electrical mechanism carrier constituted by a single support piece which is shaped as a front panel and which is configured to be attached to a cable tray.

EP1071182A1 discloses an electrical mechanism carrier according to the preamble of claim 1.

### Disclosure of the invention

In view of the fact that the background precedents do not resolve the problem of providing a simple installation with guaranteed safety for groups of two or more electrical mechanisms in one raceway, the solution has been adopted whereby the box is firmly joined to the frame using releasable means and the frame is attached by fitting to a fixed location structure, such as a raceway or another similar arrangement.

According the above solution, the plural electrical mechanism carrier according to claim 1 has been devised.

Preferably, said association means arranged on the front panel and on the open box consist of four cylindrical, hollow projections arranged between the two end areas of the inner side of said front panel frame, and in another four cylindrical, hollow projections arranged on four corners of said open box, with the holes of said hollow projections arranged on the frame being blind holes, and with the holes of said hollow projections arranged on the open box being through holes.

Preferably, said front panel frame is rectangular and its opening is also rectangular, with said opening being crossed in the transverse direction by a plurality of regularly distributed crossbeams connected at the ends thereof to opposite sections of said cantilever skirting, with said crossbeams having an inverted T-shape straight section arranged so that said straight section coincides with the width of said cantilever skirting and one end of said straight section coincides with the surface of said step on the perimeter wall of the frame opening edge.

Preferably, the free edge of said cantilever skirting has a crenellated edging where, in some of the corresponding hollows on one and another side of said cantilever skirting; are located the ends of said crossbeams.

Preferably, said open box has one of its ends forming a hinged cover shaped like a half-box that is hinged to the bottom of said open box, with said hinged cover having anchoring means consisting of two hooked appendices arranged on some points of said hinged cover opposite the points at which said hinged cover is hinged to the bottom wall, with said hooked appendices being anchored in respective heels in the corners of said open box where said cylindrical, hollow projections are provided.

Preferably, said front panel frame is rectangular and its opening is also rectangular, with said rectangular opening being offset with respect to said frame, so that, in the longitudinal direction, the end of said frame corresponding to the end of said open box where said hinged cover shaped like a half-box is located, is wider than the opposite end of said frame.

Preferably, said outer engagement means, arranged on the periphery of the front panel frame, are differentiated into end engagement means made up of rectangular cantilever tabs provided at their free ends with deep level hooked teeth, and into central engagement means made up of rectangular, cantilever tabs that are much shorter than those forming said end engagement means and which are provided with medium level hooked teeth that are located, with respect to said frame, at a lower level than said deep level hooked teeth on the end engagement means, and said inner engagement means are made up of trapezoidal, cantilever tabs which, on their smaller base, have a deep level hooked tooth located, with respect to said frame, at a similar level to that of said deep level hooked teeth on the end engagement means.

Preferably, said open box has on each of its larger side walls a continuous top band having on its top edge some inverted, trapezoidal notches in accordance with the trapezoidal tabs forming said inner engagement means on the peripheral wall of the frame.

Preferably, said open box has on each of its larger side walls a continuous top band and on its bottom wall a continuous central band, which top and central continuous bands sustain through breakable points some dihedral sections that are separated from one another by slits.

Preferably, said continuous top bands on the walls of the open box have, in the same plane as said slits separating the dihedral sections, some transverse grooves, and said continuous central band on the bottom wall, in said same plane as said slits separating the dihedral sections, has a central through hole, with said transverse grooves and said central through hole allowing there to be inserted, between every two transverse grooves and the through hole located on the same plane as said grooves, a partition provided with tabs intended to be inserted into said transverse grooves and a lug intended to be inserted into said central through hole.

Preferably, said open box has its end surfaces higher than its side surfaces, with one of said end surfaces forming a U-shape frame wherein vertical tabs are provided that emerge from the central section of said U-shape frame and which have characteristics that allow them to be removed by breaking their connection to said U-shape frame.

### Brief description of the drawings

The advantages and characteristics of the invention can be appreciated from the following description which describes a preferable embodiment of the invention, in a non-limiting manner, with reference to the accompanying drawings, in which:
Fig. 1 is an exploded perspective view of the components of one embodiment of a plural electrical mechanism carrier according to the invention, comprising an oblong front panel and a prismatic open box;
Fig. 2 is a perspective view of the components of the previous figure after they have been assembled ;
Fig. 3 is a bottom plan view of the oblong front panel in the preceding figures;
Fig. 4 is a section along line IV-IV in Fig. 3;
Fig. 5 is a side elevation view, on an enlarged scale of one end of the oblong front panel in the preceding figures ;
Fig. 6 is a top plan view of the open box in Figs.1 and 2;
Figure 7 is a section along line VI-VI in Fig. 6;
Fig. 8 is a perspective view of the carrier according to the invention, as shown in Fig. 2, after installation in a raceway of the type used in electrical installation;
Fig. 9 is a perspective view of the carrier according to the invention, as shown in Fig. 2, installed in a inner electrical distribution column.

### Detailed description of an embodiment of the invention

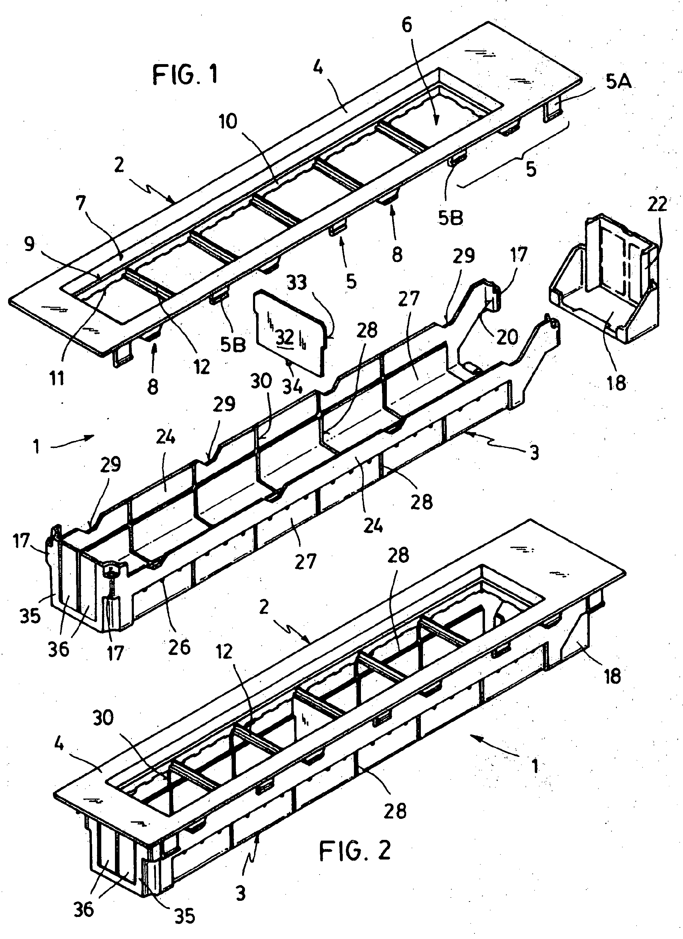

Figs. 1 and 2 illustrate an embodiment of a plural electrical mechanism carrier capable of housing up to six electrical mechanisms. Said plural carrier 1 is formed by associating an oblong front panel 2 and a prismatic open box 3 that is partially closed by the former 2. Front panel 2 forms a frame 4 that comprises on its periphery outer engagement means 5 for engaging into a fixed location structure for the ensemble. The edge of opening 6 in said frame 4 has a short perimeter wall 7 that only emerges from the non-visible side of frame 4 and extends in a discrete manner into inner engagement means 8 intended to engage into another fixed location structure. Moreover, perimeter wall 7 forms a step 9 orientated inside said opening 6 and which extends into a very short cantilever skirting 10 that extends and emerges only from the non-visible side of frame 4 in planes parallel to said peripheral wall 7.

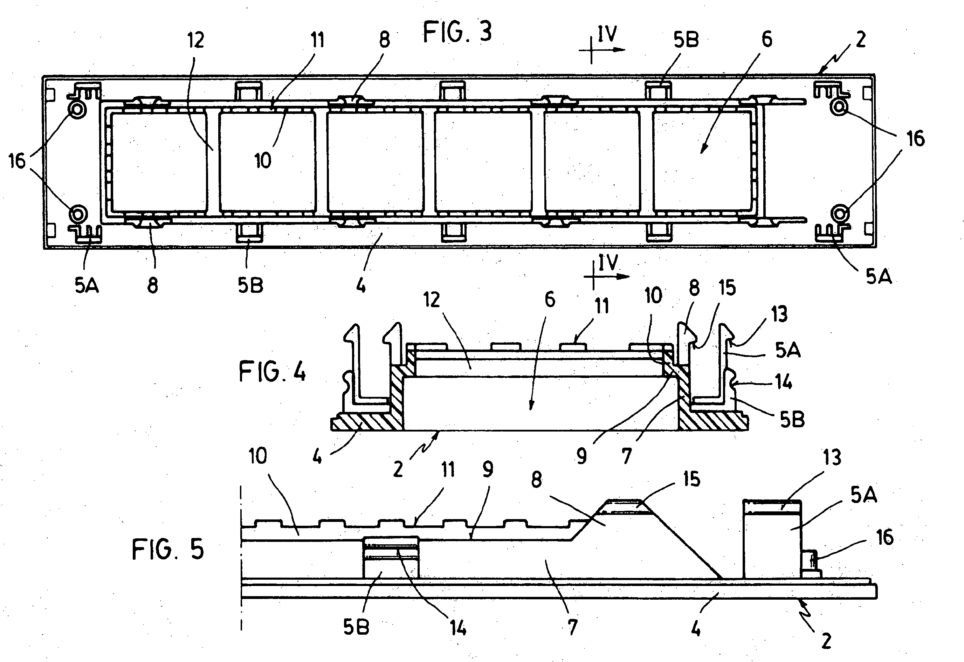

Figs. 3 and 4 show that frame 4 of oblong front panel 2 is rectangular and forms its opening 6 also with a rectangular shape. Opening 6 is crossed transversely by a plurality of regularly distributed crossbeams 12 which are connected at the ends thereof in opposite sections of cantilever skirting 10, with said crossbeams 12 having an inverted T-shaped section arranged so that its straight section coincides with the width of said cantilever skirting 10 and one end of said straight section coincides with the surface of inner step 9 of peripheral wall 7. The free edge of cantilever skirting 10 has a crenellated edging 11 where, in some of its corresponding hollows on one and another side of said cantilever skirting 10, are located the ends of crossbeams 12.

As illustrated in Figs. 4 and 5, the outer engagement means 5, arranged on the periphery of the non-visible side of frame 4 of oblong front panel 2, are differentiated into end engagement means 5A made up of rectangular, cantilever tabs provided at the free ends with deep level hooked teeth 13, and into central engagement means 5B made up of rectangular, cantilever tabs that are much shorter than the former and which are provided with middle level hooked teeth 14. The level of hooked teeth 14 is lower than the level of hooked teeth 13; in other words, with respect to frame 4 the former 14 are located at a lower level than the latter 13. Inner engagement means 8 are made up of trapezoidal, cantilever tabs which, on their smaller base, have a deep level hooked tooth 15. The level of hooked tooth 15 is similar to that of teeth 13; in other words, with respect to frame 4 the former 15 is located at a similar level to that of the latter 13.

Figs. 3, 5 and 6 show that the association means between oblong front panel 2 and prismatic open box 3 consist of four cylindrical, hollow projections 16, arranged between the two end areas of the non-visible side of frame 4 of oblong front panel 2, and in another four cylindrical, hollow projections 17 arranged on four corners of prismatic open box 3. In hollow projections 16 on frame 4 the hole is a blind hole, whereas in hollow projections 17 on the corners of prismatic open box 3 the hole is a through hole.

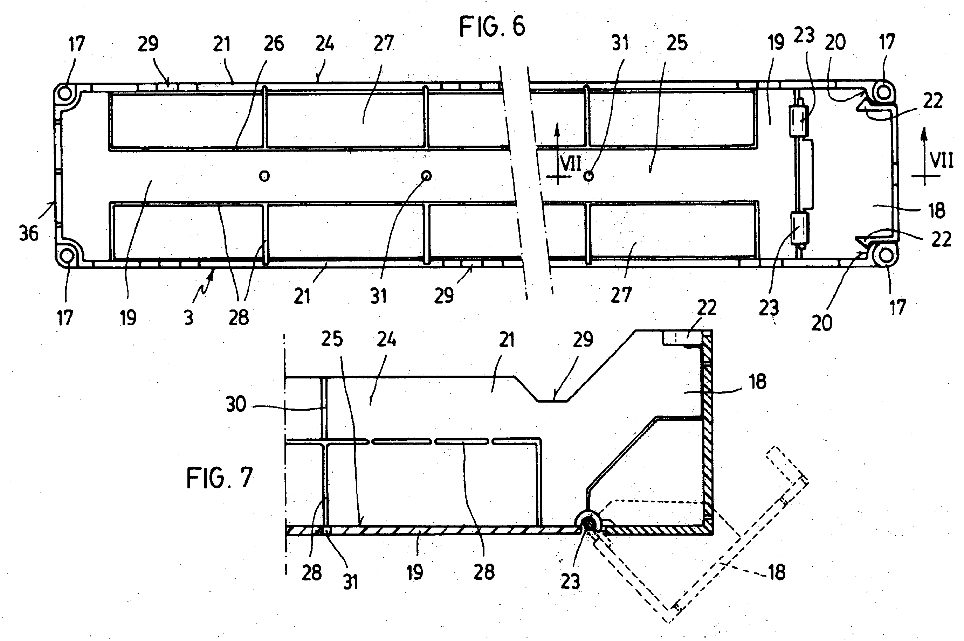

As can be seen in Fig. 1, and as shown in greater detail in Figs. 6 and 7, prismatic open box 3 has one of its ends made up of a hinged cover 18 shaped like a half-box which is hinged to bottom wall 19 of prismatic open box 3 and has means for anchoring to two heels 20 on the inner surfaces of larger walls 21 of prismatic open box 3, which correspond to cylindrical, hollow projections 17 and complement said anchoring means. The latter are made up of two hooked appendices 22 arranged on points of said hinged cover 18 shaped like a half-box, which are opposite points 23 where said hinged cover 18 hinges on bottom wall 19 of prismatic open box 3.

As can be seen in Figures 1, 6 and 7, prismatic open box 3 has on each of its larger walls 21 a continuous top band 24 and on its bottom wall 19 a continuous central band 25, which support through breakable points 26 some dihedral sections 27 separated by slits 28.

Figure 1 shows that continuous top bands 24 on larger walls 21 on prismatic open box 3 have on their top edge some inverted trapezoidal notches 29 in accordance with the trapezoidal tabs forming inner engagement means 8 arranged on peripheral wall 7 of frame 4.

Continuous top bands 24 on larger walls 21 of prismatic open box 3 have, in the same plane as slits 28 separating dihedral sections 27, some transverse grooves 30. Central band 25 on bottom wall 19, in said same plane as slits 28 separating dihedral sections 27, has a central through hole 31. Grooves 30 and central through holes 31 allow there to be inserted, between every two grooves 30 and through hole 31 located in the same plane as said grooves, a partition 32 provided with tabs 33 for inserting into said grooves 30 and a lug 34 for inserting into said central through hole 31.

As can be seen in Figure 1, prismatic open box 3 has its end surface higher than its larger side surfaces, a U-shape frame 35 where some vertical tabs 36 are provided, which emerge from the central section of said frame 35 and have characteristics which allow them to be removed by breaking their connection with said frame 35.

Opening 6 on frame 4 of oblong front panel 3 is rectangular, like the actual frame 4, but it is not centred thereon, and instead, in the longitudinal direction, frame 4 is larger at its end corresponding to the end of prismatic open box 3 where the hinged cover 18 shaped like a half-box is found.

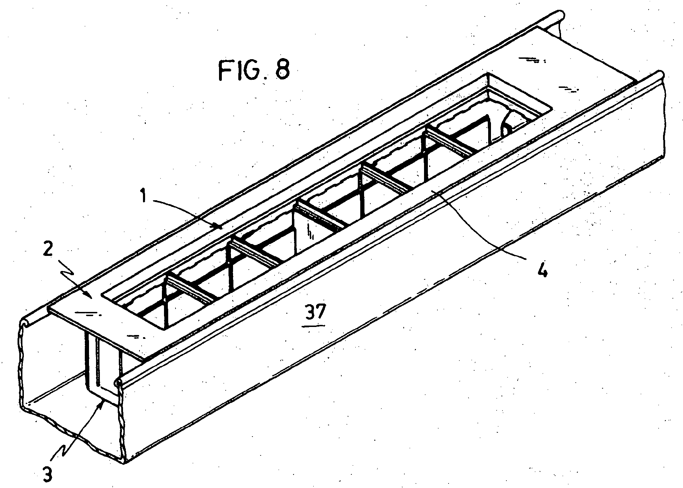

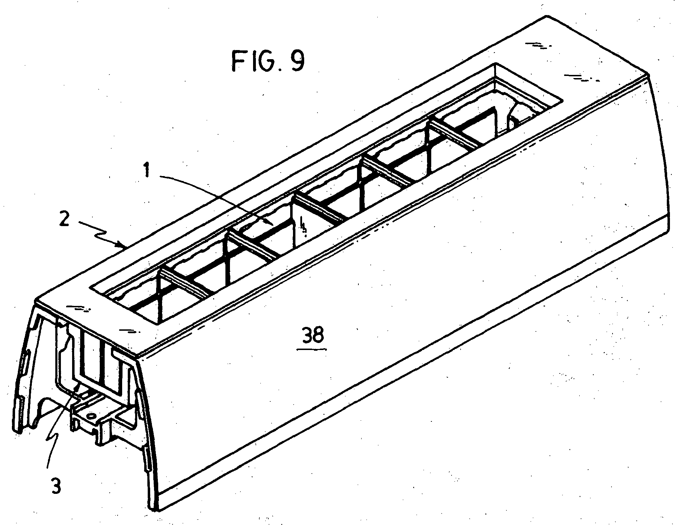

This plural electrical mechanism carrier 1 can be installed in a raceway 37, as shown in Figure 8, or, as shown in Figure 9, in an inner column 38 for low voltage electrical connections. Inner column 38 can be one of the type called towers and which are installed on the floor surface of an area, or also one of the type called columns and which are installed between said floor surface and the roof of the area. These columns and towers are intended to contain electrical conductors derived from main electrical conductors that are embedded in the floor or housed in a false roof, and which make it possible to connect said main electrical conductors with power sockets of connection boxes mounted on the actual columns or towers on level with work posts that are separated from the walls of the area. These columns and towers are made up of self-supporting, resistant sections that have some support devices at least at one end thereof and a star-shape straight section, which defines a tubular nucleus and some longitudinal raceways along which said derived electrical conductors are laid in an orderly fashion, and are closed by a housing made up of releasable covers.

## Claims

1. Plural electrical mechanism carrier applicable to fixed structures, formed by the association of an oblong front panel (2) forming a frame (4) and a prismatic open box (3) which is partially closed by said front panel (2), said panel (2) and said open box (3) having specific association means (16, 17) which allow them to be mutually associated to one another, **characterized in that** said frame (4) comprises, on the periphery of its inner side which faces said open box (3), outer engagement means (5) for engaging into a fixed location structure for the plural carrier, with said frame (4) having on the edge of its opening (6) a short peripheral wall (7) which emerges only from said inner side of said frame (4) and extends in a discrete manner into inner engagement means (8) for engaging into another fixed location structure, with said peripheral wall (7) also forming a step (9) that is orientated inside said opening (6) and which extends into a very short cantilever skirting (10) which extends by emerging at said inner side of said frame (4) in planes parallel to those of said peripheral wall (7).

2. Plural electrical mechanism carrier according to claim 1, **characterized in that** said association means arranged on front panel (2) and on open box (3) consists of four cylindrical, hollow projections (16) arranged between the two end areas of the inner side of said frame (4) of front panel (2), and in four other cylindrical, hollow projections (17) arranged on four corners of said open box (3), with the holes on said hollow projections (16) arranged on frame (4) being blind holes, and with the holes arranged on said hollow projections (17) arranged on said open box (3) being through holes.

3. Plural electrical mechanism carrier according to claims 1 or 2, **characterized in that** said frame (4) of front panel (2) is rectangular and its opening (6) is also rectangular, with said opening (6) being crossed in the transverse direction by a plurality of regularly distributed crossbeams (12) which are connected by their ends to opposite sections of said cantilever skirting (10), with said crossbeams (12) having an inverted T-shape straight section arranged so that said straight section coincides with the width of said cantilever skirting (10) and one end of said straight section coincides with the surface of said step (9) on peripheral wall (7) of the edge of frame (4) opening (6).

4. Plural electrical mechanism carrier according to claim 3, **characterized in that** the free edge of said cantilever skirting (10) has a crenellated edging (11) where, in some of the corresponding hollows on one and the other side of said cantilever skirting (10), are located the ends of said crossbeams (12).

5. Plural electrical mechanism carrier according to any of the claims 2 to 4, **characterized in that** said open box (3) has one of its ends formed by a hinged cover (18) shaped like a half-box which is cut along its diagonal and which is hinged to bottom wall (19) of said open box (3), with said hinged cover (18) comprising anchoring means made up of two hooked appendices (22) arranged on points of said hinged cover (18) opposite hinge points (23) at which said hinged cover is hinged to bottom wall (19), with said hooked appendices (22) being anchored into respective heels (20) in the corners of said open box (3) where said cylindrical, hollow projections (17) are provided.

6. Plural electrical mechanism carrier according to claim 5, **characterized in that** said frame (4) of front panel (2) is rectangular and its opening (6) is also rectangular, with said rectangular opening (6) being offset with respect to frame (4), so that, in the longitudinal direction, the end of said frame (4) in correspondence with the end of said open box (3) where we said hinged cover (18) shaped like a half-box is located, is wider than the opposite end of said frame (4).

7. Plural electrical mechanism carrier according to any of claims 1 to 6, **characterized in that** said outer engagement means (5), arranged on the periphery of the inner side of frame (4) of front panel (2), are differentiated into end engagement means (5A) made up of rectangular, cantilever tabs provided at their free ends with hooked teeth (13), and into central engagement means (5B) made up of rectangular, cantilever tabs that are much shorter than those forming said end engagement means (5A) and which are provided with hooked teeth (14) located, with respect to frame (4), at a lower level than said hooked teeth (13) of end engagement means (5A), and said inner engagement means (8) are made up of trapezoidal, cantilever tabs which, on their smaller base, have a hooked tooth (15) located, with respect to said frame (4), at the level of said hooked teeth (13) of end engagement means (5A).

8. Plural electrical mechanism carrier according to claim 7, **characterized in that** said open box (3) has on each of its larger side walls (21) a continuous top band (24) having on its top edge some inverted trapezoidal notches (29) in accordance with the trapezoidal tabs forming said inner engagement means (8) on peripheral wall (7) of frame (4).

9. Plural electrical mechanism carrier according to any of the claims 1 to 8, **characterized in that** said open box (3) has on each of its larger side walls (21) a continuous top band (24) and on its bottom wall (19) a continuous central band (25), which continuous top (24) and central (25) bands support through breakable points (26) some dihedral sections (27) separated by slits (28).

10. Plural electrical mechanism carrier according to claim 9, **characterized in that** said continuous top band (24) on the walls of open box (3) have, in the same plane as said slits (28) separating dihedral sections (27), some transverse grooves (30), and said continuous central band (25) on bottom wall (19), in said same plane as said slits (28) separating dihedral sections (27), has a central through hole (31), located in the same plane as said grooves (30), said plural electrical mechanism carrier also comprising a partition (32) provided with tabs (33) for inserting into said transverse grooves (30) and a lug (34) for inserting into said central through hole (31).

11. Plural electrical mechanism carrier according to any of the claims 1 to 10, **characterized in that** said open box (3) has its end surfaces higher than its side surfaces, with one of said end surfaces forming a U-shape frame (35) where there are vertical tabs (36) that emerge from the central section of said U-shape frame (35) and which have characteristics which allow them to be removed by breaking their connection with said U-shape frame (35).

## Patentansprüche

1. Mehrfachträger für elektrische Mechanismen, anwendbar auf feste Strukturen und gebildet durch die Verbindung einer länglichen Vorderplatte (2), die einen Rahmen (4) bildet, und eines prismatischen offenen Kastens (3), der von der Vorderplatte (2) teilweise verschlossen wird, wobei die Platte (2) und der offene Kasten (3) spezifische Verbindungsmittel (16, 17) aufweisen, die es erlauben, dass sie wechselweise miteinander verbunden werden können, **gekennzeichnet dadurch, dass** der Rahmen (4) auf dem Randbereich seiner Innenseite, die zum offenen Kasten (3) weist, äußere Eingriffsmittel (5) zum Eingreifen in eine feste Ortsstruktur für den Mehrfachträger umfasst, wobei der Rahmen (4) auf der Kante seiner Öffnung (6) eine kurze Randwand (7) aufweist, die nur aus der Innenseite des Rahmens (4) heraustritt und auf eine diskrete Weise in innere Eingriffsmittel (8) zum Eingreifen in eine andere feste Ortsstruktur übergeht, wobei die Randwand (7) auch eine Stufe (9) bildet, die ins Innere der Öffnung (6) ausgerichtet ist und die in einen sehr kurzen Auslegersaum (10) übergeht, der in Ebenen verläuft, die parallel zu denen der Randwand (7) sind, indem er an der Innenseite des Rahmens (4) heraustritt.

2. Mehrfachträger für elektrische Mechanismen nach Anspruch 1, **gekennzeichnet dadurch, dass** die auf der Vorderplatte (2) und auf dem offenen Kasten (3) angeordneten Verbindungsmittel aus vier zylindrischen hohlen Vorsprüngen (16), die zwischen den zwei Endbereichen der Innenseite des Frames (4) der Vorderplatte (2) angeordnet sind, und aus vier anderen zylindrischen hohlen Vorsprüngen (17), die auf vier Ecken des offenen Kastens (3) angeordnet sind, bestehen, wobei die Löcher auf den auf dem Rahmen (4) angeordneten hohlen Vorsprüngen (16) Sacklöcher sind und wobei die Löcher, die auf den auf dem offenen Kasten (3) angeordneten hohlen Vorsprüngen (17) angeordnet sind, Durchgangslöcher sind.

3. Mehrfachträger für elektrische Mechanismen nach Anspruch 1 oder 2, **gekennzeichnet dadurch, dass** der Rahmen (4) der Vorderplatte (2) rechteckig ist und auch seine Öffnung (6) rechteckig ist, wobei die Öffnung (6) in der Querrichtung von mehreren regelmäßig verteilten Querbalken (12) gekreuzt wird, die an ihren Enden mit gegenüberliegenden Abschnitten des Auslegersaums (10) verbunden sind, wobei die Querbalken (12) einen geraden Abschnitt mit umgekehrter T-Form aufweisen und so angeordnet sind, dass der gerade Abschnitt mit der Breite des Auslegersaums (10) übereinstimmt und ein Ende des geraden Abschnitts mit der Oberfläche der Stufe (9) auf der Randwand (7) der Kante der Öffnung (6) des Rahmens (4) übereinstimmt.

4. Mehrfachträger für elektrische Mechanismen nach Anspruch 3, **gekennzeichnet dadurch, dass** das die freie Kante des Auslegersaums (10) eine zinnenartige Kantenführung (11) aufweist, in der die Enden der Querbalken (12) in einigen der entsprechenden Hohlstellen auf der einen und der anderen Seite des Auslegersaums (10) angeordnet sind.

5. Mehrfachträger für elektrische Mechanismen nach einem der Ansprüche 2 bis 4, **gekennzeichnet dadurch, dass** eines der Enden des offenen Kastens (3) durch eine Abdeckung (18) mit Gelenk, die wie ein Halbkasten, der entlang seiner Diagonalen abgeschnitten ist, und die gelenkartig mit der unteren Wand (19) des offenen Kastens (3) verbunden ist, gebildet ist, wobei die Abdeckung (18) mit Gelenk Verankerungsmittel umfasst, die aus zwei hakenförmigen Fortsätzen (22) gebildet sind, die an Punkten der Abdeckung (18) mit Gelenk angeordnet sind, die Gelenkpunkten (23), an denen die Abdeckung mit Gelenk gelenkartig mit der unteren Wand (19) verbunden ist, gegenüberliegen, wobei die hakenförmigen Fortsätze (22) jeweils in Absätzen (20) in den Ecken des offenen Kastens (3) verankert sind, in denen zylindrische hohle Vorsprünge (17) vorgesehen sind.

6. Mehrfachträger für elektrische Mechanismen nach Anspruch 5, **gekennzeichnet dadurch, dass** der Rahmen (4) der Vorderplatte (2) rechteckig ist und auch seine Öffnung (6) rechteckig ist, wobei die rechteckige Öffnung (6) bezüglich des Rahmens (4) versetzt ist, sodass das Ende des Rahmens (4), das dem Ende des offenen Kastens (3) entspricht, an dem die wie ein Halbkasten geformte Abdeckung (18) mit Gelenk angeordnet ist, in der Längsrichtung breiter als das gegenüberliegende Ende des Rahmens (4) ist.

7. Mehrfachträger für elektrische Mechanismen nach einem der Ansprüche 1 bis 6, **gekennzeichnet dadurch, dass** die äußeren Eingriffsmittel (5), die auf dem Randbereich der Innenseite des Rahmens (4) der Vorderplatte (2) angeordnet sind, in Endeingriffsmittel (5A), die von rechteckigen Auslegerzapfen mit hakenförmigen Zähnen (13) an ihren freien Enden gebildet sind, und in zentrale Eingriffsmittel (5B), die aus rechteckigen Auslegerzapfen, die viel kürzer als die die Endeingriffsmittel (5A) bildenden Auslegerzapfen sind und die mit hakenförmigen Zähnen (14) versehen sind, die bezüglich des Rahmens (4) auf einer niedrigeren Höhe als die hakenförmigen Zähne (13) der Endeingriffsmittel (5A) angeordnet sind, gebildet sind, unterschieden werden, und wobei die inneren Eingriffsmittel (8) aus trapezförmigen Auslegerzapfen gebildet sind, die auf ihrer kürzeren Grundseite einen hakenförmigen Zahn (15) aufweisen, der bezüglich des Rahmens (4) auf der Höhe der hakenförmigen Zähne (13) der Endeingriffsmittel (5A) angeordnet ist.

8. Mehrfachträger für elektrische Mechanismen nach Anspruch 7, **gekennzeichnet dadurch, dass** der offene Kasten (3) auf jeder seiner längeren Seitenwände (21) ein durchgängiges Oberband (24), das an seiner Oberkante einige umgekehrt trapezförmige Einschnitte (29) entsprechend den die inneren Eingriffsmittel (8) an der Randwand (7) des Rahmens (4) bildenden trapezförmigen Zapfen aufweist.

9. Mehrfachträger für elektrische Mechanismen nach einem der Ansprüche 1 bis 8, **gekennzeichnet dadurch, dass** der offene Kasten (3) auf jeder seiner längeren Seitenwände (21) ein durchgängiges Oberband (24) und auf seiner unteren Wand (19) ein durchgängiges Zentralband (25) aufweist, wobei die durchgängigen Ober- und Zentralbänder (24, 25) über brechfähige Punkte (26) einige durch Schlitze (28) getrennte Diederabschnitte (27) stützen.

10. Mehrfachträger für elektrische Mechanismen nach Anspruch 9, **gekennzeichnet dadurch, dass** das durchgängige Oberband (24) auf den Wänden des offenen Kastens (3) in der gleichen Ebene wie die die Diederabschnitte (27) trennenden Schlitze (28) einige Quernuten (30) aufweist, und wobei das durchgängige Zentralband (25) auf der unteren Wand (19) in der gleichen Ebene wie die die Diederabschnitte (27) trennenden Schlitze (28) ein zentrales Durchgangsloch (31) aufweist, das in der gleichen Ebene wie die Nuten (30) angeordnet ist, wobei der Mehrfachträger für elektrische Mechanismen ebenfalls ein Partitionselement (32) umfasst, das mit Vorsprüngen (33) zum Einfügen in die Quernuten (30) und einem Aufsatz (34) zum Einfügen in das zentrale Durchgangsloch (31) versehen ist.

11. Mehrfachträger für elektrische Mechanismen nach einem der Ansprüche 1 bis 10, **gekennzeichnet dadurch, dass** die Endflächen des offenen Kastens (3) höher als seine Seitenflächen sind, wobei eine der Endflächen einen U-förmigen Rahmen (35) bildet, bei dem vertikale Vorsprünge (36) vorhanden sind, die aus einem zentralen Abschnitt des U-förmigen Rahmens (35) heraustreten und die solche charakteristischen Eigenschaften aufweisen, die es erlauben, dass sie durch Brechen ihrer Verbindung mit dem U-förmigen Rahmen (35) entfernt werden können.

## Revendications

1. Support pour plusieurs mécanismes électriques applicable à des structures fixes, formé par l'association d'un panneau avant (2) oblong formant un cadre (4) et d'un caisson ouvert (3) prismatique qui est partiellement fermé par ledit panneau avant (2), ledit panneau (2) et ledit caisson ouvert (3) comportant des moyens d'association spécifiques (16, 17) qui leur permettent d'être mutuellement associés l'un à l'autre, **caractérisé en ce que** ledit cadre (4) comprend, sur la périphérie de son côté interne qui est orienté vers ledit caisson ouvert (3), des moyens de mise en prise externes (5) pour se mettre en prise dans une structure de positionnement fixe du support multiple, ledit cadre (4) comportant sur le bord de son ouverture (6) une courte paroi périphérique (7) qui ne dépasse que dudit côté interne dudit cadre (4) et s'étend d'une manière discrète dans des moyens de mise en prise internes (8) pour se mettre en prise avec une autre structure de positionnement fixe, ladite paroi périphérique (7) formant également un palier (9) qui est orienté à l'intérieur de ladite ouverture (6) et qui s'étend dans une très petite plinthe en porte-à-faux (10) qui s'étend en dépassant au niveau dudit côté interne dudit cadre (4) dans des plans parallèles à ceux de ladite paroi périphérique (7).

2. Support pour plusieurs mécanismes électriques selon la revendication 1, **caractérisé en ce que** lesdits moyens d'association situés sur le panneau avant (2) et sur le caisson ouvert (3) sont constitués de quatre saillies creuses cylindriques (16) situées entre les deux zones d'extrémité du côté interne dudit cadre (4) du panneau avant (2), et de quatre autres saillies creuses cylindriques (17) situées sur quatre angles dudit caisson ouvert (3), les trous sur lesdites saillies creuses (16) situées sur le cadre (4) étant des trous borgnes, les trous situés sur lesdites saillies creuses (17) situées sur ledit caisson ouvert (3) étant des trous traversants.

3. Support pour plusieurs mécanismes électriques selon la revendication 1 ou 2, **caractérisé en ce que** ledit cadre (4) du panneau avant (2) est rectangulaire et son ouverture (6) est également rectangulaire, ladite ouverture (6) étant croisée dans la direction transversale par une pluralité de traverses réparties de façon régulière (12) qui sont reliées par leurs extrémités à des sections opposées de ladite plinthe en porte-à-faux (10), lesdites traverses (12) ayant une section droite en forme de T inversé disposée de telle sorte que ladite section droite coïncide avec la largeur de ladite plinthe en porte-à-faux (10) et qu'une extrémité de ladite section droite coïncide avec la surface dudit palier (9) sur la paroi périphérique (7) du bord d'ouverture (6) de cadre (4).

4. Support pour plusieurs mécanismes électriques selon la revendication 3, **caractérisé en ce que** le bord libre de ladite plinthe en porte-à-faux (10) présente une bordure crénelée (11) où, dans certains des creux correspondants sur un côté et l'autre côté de ladite plinthe en porte-à-faux (10), sont situées les extrémités desdites traverses (12).

5. Support pour plusieurs mécanismes électriques selon l'une quelconque des revendications 2 à 4, **caractérisé en ce que** ledit caisson ouvert (3) a une de ses extrémités formée par un couvercle articulé (18) en forme de demi-caisson qui est découpé le long de sa diagonale et qui est articulé à la paroi inférieure (19) dudit caisson ouvert (3), ledit couvercle articulé (18) comprenant des moyens d'ancrage composés de deux appendices recourbés (22) situés sur des points dudit couvercle articulé (18) opposés à des points d'articulation (23) au niveau desquels ledit couvercle articulé est articulé à la paroi inférieure (19), lesdits appendices recourbés (22) étant ancrés dans des talons respectifs (20) dans les angles dudit caisson ouvert (3) où sont placées lesdites saillies cylindriques creuses (17).

6. Support pour plusieurs mécanismes électriques selon la revendication 5, **caractérisé en ce que** ledit cadre (4) du panneau avant (2) est rectangulaire et son ouverture (6) est également rectangulaire, ladite ouverture rectangulaire (6) étant décalée par rapport au cadre (4), de telle sorte que, dans la direction longitudinale, l'extrémité dudit cadre (4) en correspondance avec l'extrémité dudit caisson ouvert (3) où nous avons dit que le couvercle articulé (18) en forme de demi-caisson était situé, est plus large que l'extrémité opposée dudit cadre (4).

7. Support pour plusieurs mécanismes électriques selon l'une quelconque des revendications 1 à 6, **caractérisé en ce que** lesdits moyens de mise en prise externes (5), situés sur la périphérie du côté interne du cadre (4) du panneau avant (2), se différencient en moyens de mise en prise d'extrémité (5A) composés de pattes rectangulaires en porte-à-faux dotées à leurs extrémités libres de dents recourbées (13), et en moyens de mise en prise centraux (5B) composés de pattes rectangulaires en porte-à-faux qui sont bien plus courtes que celles formant lesdits moyens de mise en prise d'extrémité (5A) et qui sont dotées de dents recourbées (14) situées, par rapport au cadre (4), à un niveau inférieur que celui desdites dents recourbées (13) des moyens de mise en prise d'extrémité (5A), et lesdits moyens de mise en prise internes (8) sont composés de pattes trapézoïdales en porte-à-faux qui, sur leur base plus petite, comportent une dent recourbée (15), située, par rapport audit cadre (4), au niveau desdites dents recourbées (13) des moyens de mise en prise d'extrémité (5A).

8. Support pour plusieurs mécanismes électriques selon la revendication 7, **caractérisé en ce que** ledit caisson ouvert (3) comporte sur chacune de ses parois latérales plus larges (21) une bande supérieure continue (24) comportant sur son bord supérieur des encoches trapézoïdales inversées (29) coïncidant avec les pattes trapézoïdales formant lesdits moyens de mise en prise internes (8) sur la paroi périphérique (7) du cadre (4).

9. Support pour plusieurs mécanismes électriques selon l'une quelconque des revendications 1 à 8, **caractérisé en ce que** ledit caisson ouvert (3) comporte sur chacune de ses parois latérales (21) plus larges une bande supérieure (24) continue et sur sa paroi inférieure (19) une bande centrale (25) continue, lesquelles bandes continues supérieure (24) et centrale (25) supportent par le biais de points cassables (26) des sections dièdres (27) séparées par des fentes (28).

10. Support pour plusieurs mécanismes électriques selon la revendication 9, **caractérisé en ce que** ladite bande supérieure (24) continue sur les parois de caisson ouvert (3) comportent, dans le même plan que lesdites fentes (28) séparant les sections dièdres (27), des gorges transversales (30), et ladite bande centrale (25) continue sur la paroi inférieure (19), dans ledit même plan que lesdites fentes (28) séparant les sections dièdres (27), comporte un trou traversant central (31), situé dans le même plan que lesdites gorges (30), ledit support pour plusieurs mécanismes électriques comprenant également une cloison (32) dotée de pattes (33) pour l'insertion dans lesdites gorges transversales (30) et un ergot (34) pour l'insertion dans ledit trou traversant central (31).

11. Support pour plusieurs mécanismes électriques selon l'une quelconque des revendications 1 à 10, **caractérisé en ce que** les surfaces d'extrémité dudit caisson ouvert (3) sont plus hautes que ses surfaces latérales, l'une desdites surfaces d'extrémité formant un cadre en U (35) où des pattes verticales (36) dépassent de la section centrale dudit cadre en U (35) et qui ont des caractéristiques qui leur permettent d'être retirées par rupture de leur liaison avec ledit cadre en U (35).
